# EUROPÄISCHE PATENTANMELDUNG

(11) **EP 1 180 773 A2**
(43) Veröffentlichungstag der Anmeldung: **20.02.2002**
(21) Anmeldenummer: 01000309.3
(22) Anmeldetag: 20.07.2001
(51) Int. Cl.: H01G 4/35

(54) **Mobilfunkgerät**

(30) Priorität: 21.07.2000 DE 10035584
(71) Anmelder: Philips Corporate Intellectual Property GmbH, 52064 Aachen (DE); Koninklijke Philips Electronics N.V., 5621 BA Eindhoven (NL)
(72) Erfinder: Kiewitt, Rainer, 52064 Aachen (DE); Klee, Mareike, 52064 Aachen (DE); Jedeloo, Pieter Willem, 52064 Aachen (DE)
(74) Vertreter: Volmer, Georg

(57) **Zusammenfassung**

Die Erfindung beschreibt ein Mobilfunkgerät ausgestattet mit einem Sender und einem Empfänger, welche jeweils ein Hochfrequenzbauteil mit integriertem Entkopplungskondensator enthalten können. Die Erfindung beschreibt auch ein Hochfrequenzbauteil.

## Beschreibung

Die Erfindung betrifft ein Mobilfunkgerät ausgestattet mit einem Sender und einem Empfänger, welche jeweils ein Hochfrequenzbauteil enthalten können.

Ein Mobilfunkgerät enthält neben einem Lautsprecher, einer Anzeigevorrichtung, Mittel zur Stromversorgung unter anderem auch einen Sender mit einem Hochfrequenzbauteil und einen Empfänger mit einem Hochfrequenzbauteil, um Daten empfangen und senden zu können.

Das Mobilfunkgerät umfasst neben einer Hochfrequenzschaltung noch eine Gleichstromquelle, welche von den Hochfrequenzsignalen entkoppelt werden muss.

Zur Entkopplung werden Kondensatoren, sogenannte Entkopplungskondensatoren, eingesetzt. Die Aufgabe eines Entkopplungskondensators liegt darin, die unerwünschten Hochfrequenzsignale zu dämpfen, um eine konstante Gleichstromversorgung der Komponenten der Hochfrequenzschaltung zu gewährleisten.

Um eine Entkopplung über einen breiten Frequenzbereich zu erhalten, werden Entkopplungskondensatoren mit einem großen C (Kapazität) /L (Induktivität)-Verhältnis, dass heißt mit großen Kapazitätswerten und niedrigen Induktionswerten, benötigt. Im Idealfall werden alle unerwünschten Hochfrequenzsignale durch einen derartigen Kondensatoren gedämpft. Obwohl heutzutage diskrete Kondensatoren mit niedrigen Induktivitätswerten hergestellt werden können, sind Induktivitätswerte von 400 pH für Kondensatoren der Bauart 0402 bzw. 300 pH für Kondensatoren der Bauart 0201 so groß, dass nur Kondensatoren mit Kapazitätswerten von einigen pF eingesetzt werden können. Mit solch einem Entkopplungskondensator kann nur ein enger Frequenzbereich entkoppelt werden. Aus diesem Grund werden zur Entkopplung eines breiten Frequenzbereichs mehrere, diskrete Kondensatoren mit unterschiedlichen Kapazitäten auf das Substrat, auf dem sich die Hochfrequenzschaltung und die Gleichstromquelle befinden, aufgebracht. So werden Kondensatoren mit kleinen Kapazitäten zur Entkopplung höherer Frequenzen und Kondensatoren mit hohen Kapazitäten zur Entkopplung der niedrigeren Frequenzen verwendet.

Die Verwendung und Montage von mehreren diskreten Entkopplungskondensatoren ist nicht nur teuer, sondern die diskreten Entkopplungskondensatoren haben auch einen großen Platzbedarf auf dem Substrat.

Aus der US 6,038,122 ist ein Entkopplungskondensator bekannt, dessen eine Elektrode eine sich verengende, beispielsweise eine dreieckige oder fächerförmige, Form aufweist. Durch dieses besondere Elektroden-Design weist der Kondensator zwischen seinen beiden Anschlussstellen variierende Kapazitätswerte auf und die unterschiedlichen Frequenzen werden in unterschiedlichen Bereichen des Entkopplungskondensators entkoppelt. Vorteilhaft an diesem Entkopplungskondensator ist, dass nur ein diskretes Bauelement montiert werden muss. Nachteilig ist bei diesem Entkopplungskondensator, dass er aufgrund der besonderen Elektrodenstruktur sehr aufwendig und teuer herzustellen ist.

Der Erfindung liegt die Aufgabe zugrunde, ein Mobilfunkgerät ausgestattet mit einem Sender und einem Empfänger, die jeweils ein Hochfrequenzbauteil mit einem Entkopplungskondensator enthalten können, bereitzustellen, wobei der Entkopplungskondensator über einen breiten Frequenzbereich entkoppelt und einfach herzustellen ist.

Die Aufgabe wird gelöst, durch ein Mobilfunkgerät ausgestattet mit einem Sender und einem Empfänger, die jeweils ein Hochfrequenzbauteil umfassen können, wobei das Hochfrequenzbauteil auf einem gemeinsamen Substrat eine Hochfrequenzschaltung, eine Gleichstromquelle und einen integrierten Entkopplungskondensator enthält, wobei der Entkopplungskondensator eine erste Elektrode, ein Dielektrikum, eine zweite Elektrode sowie eine erste und zweite Stromzuführung auf derselben Seite des Entkopplungskondensators aufweist und bei dem eine Elektrode mit der Hochfrequenzschaltung und der Gleichstromquelle und die andere Elektrode mit Erde verbunden ist.

In dem Mobilfunkgerät kann durch die direkte Integration des Entkopplungskondensators auf dem Substrat mit der Hochfrequenzschaltung ein Entkopplungskondensator mit kleinen Induktivitätswerten geschaffen werden, da sehr kleine Elektrodenabmessungen möglich sind. Dadurch kann das C/L-Verhältnis des Entkopplungskondensators erhöht werden. Außerdem kann mit Hilfe der Integration ein Entkopplungskondensator hergestellt werden, bei dem die Stromzuführungen auf derselben Seite des Entkopplungskondensators liegen. Durch eine Kontaktierung der Elektroden auf derselben Seite des Kondensators fließt der Strom gegensinnig durch die Elektroden und die im Entkopplungskondensator auftretenden magnetischen Felder, welche die Selbstinduktion bedingen, werden deutlich reduziert. Dadurch wird das C/L-Verhältnis des Entkopplungskondensators erhöht. Das Anbringen der Stromzuführungen auf einer Seite wird auch als Counter-Current-Prinzip bezeichnet.

Durch das verbesserte C/L-Verhältnis des Entkopplungskondensators wird nur ein Entkopplungskondensator zur Entkopplung eines breiten Frequenzbandes benötigt.

Ein weiterer Vorteil des Mobilfunkgeräts ist, dass die äußeren Abmessungen eines integrierten Entkopplungskondensators kleiner sind und so kleinere Hochfrequenzbauteile hergestellt werden können. Insgesamt wird dadurch eine weitere Miniaturisierung des Mobilfunkgeräts möglich. Weiterhin wird eine kostenintensive Bestückung des Hochfrequenzbauteils mit diskreten Entkopplungskondensatoren überflüssig.

Des weiteren betrifft die Erfindung ein Hochfrequenzbauteil, das auf einem gemeinsamen Substrat eine Hochfrequenzschaltung, eine Gleichstromquelle und einen integrierten Entkopplungskondensator enthält, wobei der Entkopplungskondensator eine erste Elektrode, ein Dielektrikum, eine zweite Elektrode sowie eine erste und zweite Stromzuführung auf derselben Seite des Entkopplungskondensators aufweist und bei dem eine Elektrode mit der Hochfrequenzschaltung und der Gleichstromquelle und die andere Elektrode mit Erde verbunden ist.

Es ist bevorzugt, dass der Entkopplungskondensator in Dünnschicht-Technik ausgeführt ist.
Mit Hilfe von Dünnschichtverfahren kann das C/L-Verhältnis eines Entkopplungskondensators beeinflusst werden. Mit einem Dünnschichtverfahren kann ein Entkopplungskondensator realisiert werden, dessen Dielektrikum eine geringere Schichtdicke d (d < 1 µm) und somit eine höhere Kapazitätsdichte aufweist. Der resultierende Entkopplungskondensator weist einen größeren Wert für sein C/L-Verhältnis auf.

Es ist besonders bevorzugt, dass ein weiteres integriertes, passives Bauelement auf dem Substrat aufgebracht ist.

Durch entsprechende Strukturierung der Elektroden und des Dielektrikums des Entkopplungskondensators oder durch Abscheidung weiterer funktioneller Schichten können weitere integrierte, passive Bauelemente wie beispielsweise eine Induktivität, ein Widerstand oder ein Kondensator direkt auf das Substrat aufgebracht werden. Dadurch kann die Montage weiterer diskreter Bauelemente, die auf dem Hochfrequenzbauteil vorhanden sein müssen, vermieden und eine weitere Miniaturisierung des Mobilfunkgeräts ermöglicht werden.

Es ist vorteilhaft, dass die Hochfrequenzschaltung eine Verstärkerschaltung, eine Mischstufe oder ein spannungskontrollierter Oszillator ist.

Bei all diesen Hochfrequenzschaltungen ist eine effektive Entkopplung störender Hochfrequenzsignale nötig.

Im folgenden soll die Erfindung anhand von drei Figuren und zwei Ausführungsbeispielen erläutert werden. Dabei zeigt
- Fig 1: einen Querschnitt durch ein Substrat mit integriertem Entkopplungskondensator,
- Fig. 2: eine Aufsicht auf ein Substrat mit Entkopplungskondensator, Hochfrequenzschaltung und Gleichstromquelle und
- Fig. 3: die Dämpfungskurve zweier diskreter Kondensatoren im Vergleich mit der Dämpfungskurve eines integrierten Entkopplungskondensators.

Ein Mobilfunkgerät enthält beispielsweise Mittel zur Stromversorgung, eine Anzeigevorrichtung, einen Lautsprecher, ein Mikrophon, eine Eingabevorrichtung, eine Speichervorrichtung, eine Antenne, einen Sender und einen Empfänger. Der Sender und der Empfänger können jeweils ein Hochfrequenzbauteil mit einer Hochfrequenzschaltung 8 und einer Gleichstromquelle 9 aufweisen. Zur Entkopplung der Gleichstromquelle 9 von den Hochfrequenzsignalen enthält das Hochfrequenzbauteil einen Entkopplungskondensator.

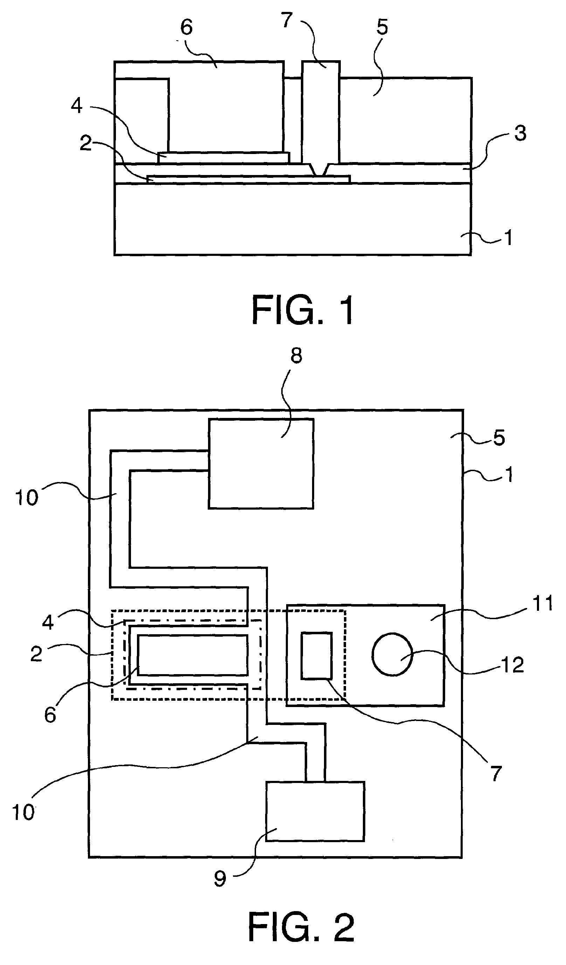

Gemäß Fig. 1 weist ein integrierter Entkopplungskondensator auf einem Substrat 1, welches zum Beispiel ein keramisches Material, ein low-temperature-cofired Substrat mit Funktionen, ein keramisches Material mit einer Planarisierungsschicht aus Glas, ein glaskeramisches Material, ein Glasmaterial, Si, GaAs, Saphir, ein Laminat, ein Glassubstrat mit Klebstoffschicht oder ein Glassubstrat mit Klebstoffschicht und auf der Klebstoffschicht eine SiO₂-Schicht enthält, eine erste Elektrode 2 auf. Bei Verwendung von Silicium oder GaAs als Substrat 1 wird noch eine Passivierungsschicht aus beispielsweise SiO₂, Si₃N₄ oder Glas auf dem Substrat 1 aufgebracht. Auf der ersten Elektrode 2 befindet sich ein Dielektrikum 3, welches vorzugsweise eine Dielektrizitätskonstante εᵣ mit einem Wert εᵣ > 20 aufweist. Als Materialien können zum Beispiel PbZrₓTi₁₋ₓO₃ (0 ≤ x ≤ 1) mit und ohne Dotierungen aus La oder Mn sowie mit und ohne Bleiüberschuss,
Ba₁₋ₓSrₓTiO₃ (0 ≤ x ≤ 1) mit und ohne Dotierungen, [Ba₁₋ₓSrₓTiO₃] - Pb_{1-y}Ca_{y}TiO₃ (0 ≤ x ≤ 1, 0 ≤ y ≤ 1), Ba₁₋ₓSrₓZr_{y}Ti_{1-y}O₃ (0 ≤ x ≤ 1, 0 ≤ y ≤ 1) mit und ohne Dotierungen,
Ba₁₋ₓPbₓTiO₃ (0 ≤ x ≤ 1) mit und ohne Bleiüberschuss, Ba₁₋ₓCaₓTiO₃ (0 ≤ x ≤ 1),
SrZrₓTi₁₋ₓO₃ (0 ≤ x ≤ 1) mit und ohne Dotierungen,
[PbMg_{1/3}Nb_{2/3}O₃]ₓ-[PbTiO₃]₁₋ₓ (0 ≤ x ≤ 1), (Pb,Ba,Sr)(Mg_{1/3}Nb_{2/3})ₓTi_{y}(Zn_{1/3}Nb_{2/3})_{1-x-y}O₃ (0 ≤ x ≤ 1, 0 ≤ y ≤ 1),
Pb₁₋ₓCaₓTiO₃ (0 ≤ x ≤ 1), (Ba₁₋ₓSrₓ)₂NaNb₅O₁₅ (0 ≤ x ≤ 1), (Ba₁₋ₓSrₓ)₂KNb₅O₁₅ 0 ≤ x ≤ 1),
(Ba₁₋ₓSrₓ)₂K_{1-3y}SE_{y}Nb₅O₁₅ (0 ≤ x ≤ 1, 0 ≤ y ≤ 1, SE = Ion aus der Gruppe der Seltenerd-Metalle), Ta₂O₅, Ta₂O₅ dotiert mit Al₂O₃, TiO₂, Ta₂O₅ dotiert mit TiO₂ und
Zr(Sn,Ti)O₄, BiNbO₄ mit und ohne VOₓ (1 ≤ x ≤ 2.5) und/oder CuO Dotierungen und
a) PbMg_{1/2}W_{1/2}O₃
b) PbFe_{1/2}Nb_{1/2}O₃
c) PbFe_{2/3}W_{1/3}O₃
d) PbNi_{1/3}Nb_{2/3}O₃
e) PbZn_{1/3}Nb_{2/3}O₃
f) PbSc_{1/2}Ta_{1/2}O₃
sowie Kombinationen der Verbindungen a) - f) mit PbTiO₃ und/oder PbMg_{1/3}Nb_{2/3}O₃, verwendet werden. Das Dielektrikum 3 kann alternativ über der gesamten Fläche des Substrats 1 aufgebracht sein. Auf dem Dielektrikum 3 ist eine zweite Elektrode 4 aufgebracht. Die erste Elektrode 2 und die zweite Elektrode 4 können beispielsweise Pt mit einer Schichtdicke von 50 nm bis 1 µm, Ti mit einer Schichtdicke von 1 bis 20 nm /Pt mit einer Schichtdicke von 20 bis 600 nm, Ti mit einer Schichtdicke von 1 bis 20 nm /Pt mit einer Schichtdicke von 20 bis 600 nm /Ti mit einer Schichtdicke von 1 bis 20 nm, W, Ni, Mo, Au, Cu, Ti/Pt/Al, Ti/Ag, Ti/Ag/Ti, Ti/Ag/Ir, Ti/Ir, Ti/Pd,
Ti/Ag₁₋ₓPtₓ (0 ≤ x ≤ 1), Ti/Ag₁₋ₓPdₓ (0 ≤ x ≤ 1), Ag₁₋ₓPtₓ (0 ≤ x ≤ 1), Ti/Pt₁₋ₓAlₓ (0 ≤ x ≤ 1),
Pt₁₋ₓAlₓ (0 ≤ x ≤ 1), Ti/Ag/Pt₁₋ₓAlₓ (0 ≤ x ≤ 1), Ti/Ag/Ru, Ru, Ru/RuO₂, Ti/Ru, Ti/Ir,
Ti/Ir/IrO₂, Ti/Ru/RuₓPt₁₋ₓ (0 ≤ x ≤ 1), Ti/Ag/Ir/IrOₓ (0 ≤ x ≤ 2),
Ti/Ag/Ru/RuOₓ (0 ≤ x ≤ 2), Ti/Ag/Ru/RuₓPt₁₋ₓ (0 ≤ x ≤ 1), Ti/Ag/Ru/RuₓPt₁₋ₓ/RuO_{y} (0 ≤ x ≤ 1, 0 ≤ y ≤ 2), Ti/Ag/Ru/RuOₓ/Ru_{y}Pt_{1-y} (0 ≤ x ≤ 2, 0 ≤ y ≤ 1), Ti/Ag/RuₓPt₁₋ₓ (0 ≤ x ≤ 1), Ti/Ag/PtₓAl₁₋ₓ (0 ≤ x ≤ 1),
PtₓAl₁₋ₓ/Ag/Pt_{y}Al_{1-y}(0 ≤ x ≤ 1, 0 ≤ y ≤ 1), Ti/Ag/Pt_{y}(RhOₓ)_{1-y} (0 ≤ x ≤ 2, 0 ≤ y ≤ 1),
Ti/Ag/Rh/RhOₓ (0 ≤ x ≤ 2), Rh, Rh/RhO₂, Ti/Ag/PtₓRh₁₋ₓ (0 ≤ x ≤ 1),
Ti/Ag/Pt_{y}(RhOₓ)_{1-y}/Pt_{z}Rh_{1-z} (0 ≤ x ≤ 2, 0 ≤ y ≤ 1, 0 ≤ z ≤ 1), Ti/AgₓPt₁₋ₓ/Ir (0 ≤ x ≤ 1),
Ti/AgₓPt₁₋ₓ/Ir/IrO_{y}(0 ≤ x ≤ 1,0 ≤ y ≤ 2), Ti/AgₓPt₁₋ₓ/Pt_{y}Al_{1-y}(0 ≤ x ≤ 1,0 ≤ y ≤ 1),
Ti/AgₓPt₁₋ₓ/Ru (0 ≤ x ≤ 1), Ti/AgₓPt₁₋ₓ/Ru/RuO_{y} (0 ≤ x ≤ 1, 0 ≤ y ≤ 2), Ti/Ag/Cr, Ti/Ag/Ti/ITO, Ti/Ag/Cr/ITO, Ti/Ag/ITO, Ti/Ni/ITO,
Ti/Rh, Ti/Rh/RhO₂, Ti/Ni/Al/ITO, Ti/Ni, Ti/W/Ti, WₓTi₁₋ₓ (0 ≤ x ≤ 1),
WₓTi₁₋ₓ/Al(Cu) (0 ≤ x ≤ 1), WₓTi₁₋ₓ/Al(Si) (0 ≤ x ≤ 1), WₓTi₁₋ₓ/Al (0 ≤ x ≤ 1), Al, Al dotiert mit Cu, Al dotiert mit Si, NiₓCr_{y}Al_{z}/Al (0 ≤ x ≤ 1,0 ≤ y ≤ 1,0 ≤ z ≤ 1), NiₓCr_{y}Al_{z}/Al dotiert mit Cu (0 ≤ x ≤ 1, 0 ≤ y ≤ 1, 0 ≤ z ≤ 1), NiₓCr_{y}Al_{z}/Al dotiert mit
Si (0 ≤ x ≤ 1, 0 ≤ y ≤ 1, 0 ≤ z ≤ 1) oder Ti/Cu enthalten. Auf der zweiten Elektrode 4 befindet sich eine Schutzschicht 5, welche sich vorzugsweise über die gesamte Fläche des Substrats 1 erstreckt. Als Materialien für die Schutzschicht 5 können zum Beispiel SiO₂ oder Si₃N₄ verwendet werden. Die zweite Elektrode 4 wird durch eine erste Stromzuführung 6 kontaktiert und die erste Elektrode 2 wird durch eine zweite Stromzuführung 7 kontaktiert. Die erste und die zweite Stromzuführung 6, 7 können beispielsweise Al, Cu, Cu/Ni/Au, Ni/Cr/Cu/Ni/Au oder Ni/Au enthalten.

Auf die Schutzschicht 5 werden dann die weiteren Komponenten des Hochfrequenzbauteils aufgebracht.

Die erste Stromzuführung 6 verbindet den Entkopplungskondensator mit der Hochfrequenzschaltung 8 sowie der Gleichstromquelle 9 und die zweite Stromzuführung 7 ist mit der Erde 12 verbunden.

Alternativ kann zwischen Substrat 1 und der ersten Elektrode 2 eine Barriereschicht aufgebracht sein, welche beispielsweise TiO₂, Al₂O₃, HfO₂, MgO oder ZrO₂ enthält.

In Fig. 2 ist eine Aufsicht auf ein Substrat 1 mit den Elektroden 2, 4 und Stromzuführungen 6, 7 des Entkopplungskondensators, einer Hochfrequenzschaltung 8, einer Gleichstromquelle 9 und den Leiterbahnen 10, 11 gezeigt. Auf dem Substrat 1 befindet sich die erste Elektrode 2 des Entkopplungskondensators, sowie darauf das nicht in Fig. 2 dargestellte Dielektrikum 3. Auf dem Dielektrikum 3 befindet sich die zweite Elektrode 4. Auf der zweiten Elektrode 4 und über die Gesamtfläche des Substrats 1 ist die Schutzschicht 5 aufgebracht. Auf der Schutzschicht 5 sind die Hochfrequenzschaltung 8, die Gleichstromquelle 9 sowie die Leiterbahnen 10, 11 aufgebracht. Die Hochfrequenzschaltung 8 ist beispielsweise eine Verstärkerschaltung, eine Mischstufe oder ein spannungskontrollierter Oszillator. Über die Leiterbahn 10, welche beispielsweise aus Al, Cu, Cu/Ni/Au, Ni/Cr/Cu/Ni/Au oder Ni/Au ist, und die erste Stromzuführung 6 ist die Hochfrequenzschaltung 8 mit dem Entkopplungskondensator und der Gleichstromquelle 9, welche zum Beispiel eine Batterie ist, verbunden. Die zweite Stromzuführung 7 und die Leiterbahn 12, welche beispielsweise aus Al, Cu, Cu/Ni/Au, Ni/Cr/Cu/Ni/Au oder Ni/Au ist, verbinden den Entkopplungskondensator mit der Erde 12. Die erste Stromzuführung 6 und die zweite Stromzuführung 7 sind auf an derselben Seite des Entkopplungskondensators angebracht.

Die Hochfrequenzschaltung 8 kann auch mittels Drahtbonden oder Flip-Chip-Montage aufgebracht sein.

Alternativ kann ein weiteres integriertes, passives Bauelement wie beispielsweise ein Widerstand, eine Induktivität oder ein weiterer Kondensator auf dem Substrat 1 aufgebracht sein. Dazu befinden sich auf der Schutzschicht 5 weitere funktionelle Schichten wie beispielsweise eine Widerstandschicht oder eine erste Elektrode, ein Dielektrikum und eine zweite Elektrode eines weiteren Kondensators. Auf die oberste funktionelle Schicht ist eine weitere Schutzschicht aufgebracht. Durch Vias in der weiteren Schutzschicht ist das integrierte, passive Bauelement elektrisch kontaktiert. Dieses passive Bauelement kann mit weiteren, auf dem Hochfrequenzbauteil vorhandenen Komponenten, beispielsweise einer Transistorschaltung, verbunden werden.

Es ist auch möglich, dass zwei oder mehrere integrierte, passive Bauelemente wie zum Beispiel ein Widerstand und ein Kondensator, beispielweise mit einer geringeren Kapazität C als der Entkopplungskondensator, auf dem Substrat 1 aufgebracht sind. Dazu sind auf die Schutzschicht 5 eine Widerstandsschicht und eine erste Elektrode des weiteren Kondensators aufgebracht. Darauf befindet sich eine erste, weitere Schutzschicht, welche gleichzeitig das Dielektrikum des weiteren Kondensators bildet. Auf diese erste, weitere Schutzschicht ist die zweite Elektrode des weiteren Kondensators und auf die zweite Elektrode, vorzugsweise über die gesamte Fläche des Substrats 1, ist eine zweite, weitere Schutzschicht aufgebracht. Durch Vias in der weiteren Schutzschichten sind die integrierten, passiven Bauelemente elektrisch kontaktiert und über Leiterbahnen sind sie mit weiteren, auf dem Hochfrequenzbauteil vorhandenen Komponenten, beispielsweise einer Transistorschaltung, verbunden.
Zur Herstellung eines Hochfrequenzbauteils werden zunächst mittels bekannter Dünnschichttechniken die funktionellen Schichten, wie beispielsweise die Elektroden 2, 4 und das Dielektrikum 3 auf dem Substrat 1 aufgebracht und entsprechend ihrer Funktion strukturiert. Nach Abscheidung der Schutzschicht 5 werden die für das Hochfrequenzbauteil benötigten Komponenten, wie beispielsweise die Hochfrequenzschaltung 8, Leiterbahnen 10, 11 und die Gleichstromquelle 9, aufgebracht mit bekannten Methoden aufgebracht.

Ein derartiges Hochfrequenzbauteil kann beispielsweise im Sender oder Empfänger eines mobilen Kommunikationssystems, beispielsweise einem Mobilfunkgerät, oder in einem mobilen Datenübertragungssystem, zum Beispiel einem Bluetooth-Modul, eingesetzt werden.

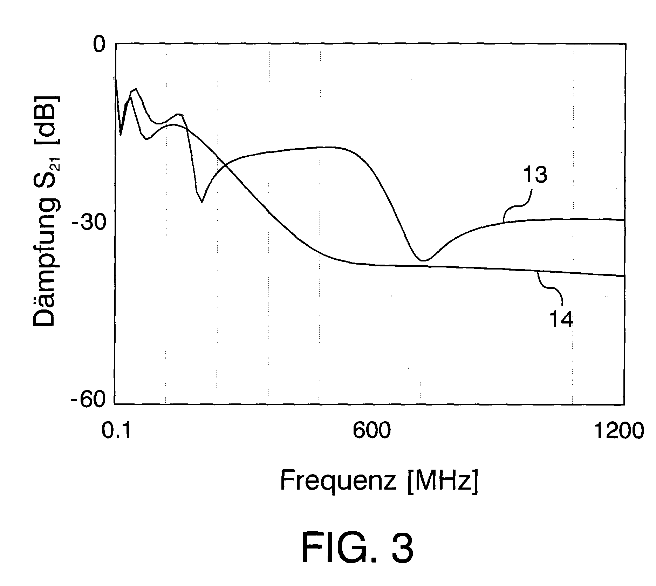

In Fig. 3 ist die Dämpfungskurve zweier diskreter Kondensatoren im Vergleich mit der Dämpfungskurve eines integrierten Entkopplungskondensators abgebildet. Dabei zeigt Kurve 13 die Dämpfungskurve zweier diskreter Kondensatoren, wobei der erste diskrete Kondensator eine Kapazität von 330 pF und eine Induktivität von 0.6 nH besitzt. Der zweite diskrete Kondensator besitzt eine Kapazität von 82 pF und eine Induktivität von 0.6 nH. In Kurve 14 ist die Dämpfungskurve eines integrierten Entkopplungskondensator mit einer Kapazität von 1 nF und einer Induktivität von 0.1 nH gezeigt.

Alternativen im Aufbau des Hochfrequenzbauteils, zum Beispiel welche Elektrode 2, 4 des Entkopplungskondensators mit der Erde 12 verbunden ist, sind dem Fachmann wohlbekannt.

Im folgenden werden Ausführungsformen der Erfindung erläutert, die beispielhafte Realisierungsmöglichkeiten darstellen.

### Ausführungsbeispiel 1

Auf einem Substrat 1 aus Al₂O₃ mit einer Planarisierungsschicht aus Glas ist eine erste Elektrode 2 aus Ti/Pt aufgebracht. Auf der ersten Elektrode 2 und über der gesamten Fläche des Substrats 1 ist ein Dielektrikum 3 aus PbZr_{0.53}Ti_{0.47}O₃ mit 5% Lanthan-Dotierung abgeschieden. Auf dem Dielektrikum 3 ist eine zweite Elektrode 4 aus Ti_{0.1}W_{0.9}/Al aufgebracht. Auf der zweiten Elektrode 4 und über der gesamten Fläche des Substrats 1 befindet sich eine Schutzschicht 5 aus Si₃N₄. Zur Kontaktierung der zweiten Elektrode 4 mit einer erste Stromzuführung 6 wurde ein Loch durch die Schutzschicht 5 geätzt, welches mit Ni/Cr/Cu/Ni/Au gefüllt ist. Zur Kontaktierung der ersten Elektrode 2 mit einer zweiten Stromzuführung 7 wurde ein Loch durch die Schutzschicht 5, und das Dielektrikum 3 geätzt, welches mit Ni/Cr/Cu/Ni/Au gefüllt ist. Auf der Schutzschicht 5 sind als Hochfrequenzschaltung 8 eine Verstärkerschaltung, als Gleichstromquelle 9 eine Batterie und Leiterbahnen 10, 11 aus Ni/Cr/Cu/Ni/Au aufgebracht. Die Leiterbahn 10 ist derart strukturiert, dass sie die Hochfrequenzschaltung 8, die erste Stromzuführung 6 und die Gleichstromquelle 9 miteinander verbindet. Die Leiterbahn 11 ist derart strukturiert, dass sie die zweite Stromzuführung 7 mit der Erde 12 verbindet.

Ein derartiges Hochfrequenzbauteil wurde im Sender und Empfänger eines Mobilfunkgerät eingebaut.

### Ausführungsbeispiel 2

Auf einem Substrat 1 aus Glas ist eine Barriereschicht aus TiO₂ und auf die Barriereschicht ist eine erste Elektrode 2 aus Ti/Pt aufgebracht. Auf der ersten Elektrode 2 und über der gesamten Fläche des Substrats 1 ist ein Dielektrikum 3 aus PbZr_{0.53}Ti_{0.47}O₃ mit 5% Lanthan-Dotierung abgeschieden. Auf dem Dielektrikum 3 ist eine zweite Elektrode 4 aus Ti_{0.1}W_{0.9}/Al aufgebracht. Auf der zweiten Elektrode 4 und über der gesamten Fläche des Substrats 1 befindet sich eine Schutzschicht 5 aus Si₃N₄. Auf der Schutzschicht 5 ist eine Widerstandsschicht aus Ni_{0.3}Cr_{0.6}Al_{0.1} und eine weitere Schutzschicht aus Si₃N₄ aufgebracht. Zur Kontaktierung der zweiten Elektrode 4 mit einer erste Stromzuführung 6 ist ein Loch durch die Schutzschicht 5 und die weitere Schutzschicht geätzt worden, welches mit Ni/Cr/Cu/Ni/Au gefüllt worden ist. Zur Kontaktierung der ersten Elektrode 2 mit einer zweiten Stromzuführung 7 ist ein Loch durch die Schutzschicht 5, die weitere Schutzschicht, und das Dielektrikum 3 geätzt worden, welches mit Ni/Cr/Cu/Ni/Au gefüllt ist. Zur Kontaktierung der Widerstandsschicht sind zwei Löcher in die weitere Schutzschicht geätzt worden, welche mit Ni/Cr/Cu/Ni/Au gefüllt sind. Auf die weitere Schutzschicht sind als Hochfrequenzschaltung 8 eine Verstärkerschaltung, als Gleichstromquelle 9 eine Batterie, Leiterbahnen 10,11 aus Ni/Cr/Cu/Ni/Au und eine Transistorschaltung aufgebracht worden. Die Leiterbahn 10 ist derart strukturiert, dass sie die Hochfrequenzschaltung 8, die erste Stromzuführung 6 und die Gleichstromquelle 9 miteinander verbindet. Die Leiterbahn 11 ist derart strukturiert, dass sie die zweite Stromzuführung 7 mit der Erde 12 verbindet. Der Widerstand ist über eine Leiterbahn mit der Transistorschaltung verbunden.

Ein derartiges Hochfrequenzbauteil wurde in einem mobilen Bluetooth-Modul eingebaut.

## Patentansprüche

1. Mobilfunkgerät ausgestattet mit einem Sender und einem Empfänger, die jeweils ein Hochfrequenzbauteil umfassen können, wobei das Hochfrequenzbauteil auf einem gemeinsamen Substrat (1) eine Hochfrequenzschaltung (8), eine Gleichstromquelle (9) und einen integrierten Entkopplungskondensator enthält, wobei der Entkopplungskondensator eine erste Elektrode (2), ein Dielektrikum (3), eine zweite Elektrode (4) sowie eine erste und zweite Stromzuführung (6, 7) auf derselben Seite des Entkopplungskondensators aufweist und bei dem eine Elektrode (2, 4) mit der Hochfrequenzschaltung (8) und der Gleichstromquelle (9) und die andere Elektrode (2, 4) mit Erde (12) verbunden ist.

2. Hochfrequenzbauteil, das auf einem gemeinsamen Substrat (1) eine Hochfrequenzschaltung (8), eine Gleichstromquelle (9) und einen integrierten Entkopplungskondensator enthält, wobei der Entkopplungskondensator eine erste Elektrode (2), ein Dielektrikum (3), eine zweite Elektrode (4) sowie eine erste und zweite Stromzuführung (6, 7) auf derselben Seite des Entkopplungskondensators aufweist und bei dem eine Elektrode (2, 4) mit der Hochfrequenzschaltung (8) und der Gleichstromquelle (9) und die andere Elektrode (2, 4) mit Erde (12) verbunden ist.

3. Hochfrequenzbauteil nach Anspruch 1 oder 2,
**dadurch gekennzeichnet,**
**dass** der Entkopplungskondensator in Dünnschicht-Technik ausgeführt ist.

4. Hochfrequenzbauteil nach Anspruch 1 oder 2,
**dadurch gekennzeichnet,**
**dass** ein weiteres integriertes, passives Bauelement auf dem Substrat (1) aufgebracht ist.

5. Hochfrequenzbauteil nach Anspruch 1 oder 2,
**dadurch gekennzeichnet,**
**dass** die Hochfrequenzschaltung (8) eine Verstärkerschaltung, eine Mischstufe oder ein spannungskontrollierter Oszillator ist.
